Europäisches Patentamt

European Patent Office

Office européen des brevets

(19)

(11) Numéro de publication: **0 070 271**
A2

(12)

# DEMANDE DE BREVET EUROPEEN

(21) Numéro de dépôt: 82870040.1

(22) Date de dépôt: 09.07.82

(51) Int. Cl.³: **A 01 G 3/06**
A 01 D 35/22

(30) Priorité: 14.07.81 BE 6047494

(43) Date de publication de la demande:
19.01.83 Bulletin 83/3

(84) Etats contractants désignés:
DE FR GB IT LU NL SE

(71) Demandeur: Beghain, René
rue du Limbourg 37
B-4000 Liège(BE)

(72) Inventeur: Beghain, René
rue du Limbourg 37
B-4000 Liège(BE)

(74) Mandataire: Dellicour, Paul
Office de Brevets E. Dellicour rue Fabry 18/012
B-4000 Liège(BE)

(54) Récolteur d'herbe pour cisaille à gazon électrique.

(57) Le récolteur est constitué par un plateau, qui épouse la forme de la lame inférieure de la cisaille pour s'adapter par sa partie arrière sous ladite lame et le patin de glissement de ladite cisaille et qui présente à l'avant sur sa face supérieure des flasques latéraux formant un boîtier ouvert à l'avant et fermé à l'arrière par une liaison entre les deux flasques. Le plateau présente à l'avant un bord découpé suivant la forme des dents d'extrémité de la lame inférieure de la cisaille.

FIG.1

Croydon Printing Company Ltd.

- 1 -

## Récolteur d'herbe pour cisaille à gazon électrique.

La présente invention est relative aux cisailles à gazon destinées à tailler les pelouses sur les bords, autour des rocailles et à d'autres endroits d'accès difficile.

On trouve sur le marché des cisailles à gazon électriques de diverses fabrications mais dont le modèle est.à peu de chose près identique. Le travail avec de telles cisailles est facile mais un convénient consiste en ce que l'herbe coupée tombe sur le sol, d'où elle doit être enlevée soit par un rateau soit par un clarificateur pour ne pas pourrir sur place.

Il a paru avantageux suivant l'invention de créer un récolteur d'herbe s'appliquant à des cisailles à gazon électriques.

Un tel récolteur d'herbe est caractérisé en ce qu'il est constitué par un plateau, qui épouse la forme de la lame inférieure de la cisaille pour s'adapter par sa partie arrière sous ladite lame et la patin de glissement de ladite cisaille et qui présente à l'avant sur sa face supérieure des flasques latéraux verticaux formant un boîtier ouvert à l'avant et fermé à l'arrière par une liaison entre les deux flasques.

Suivant l'invention la liaison entre les deux flasques latéraux est prévue à la base avec une ouverture conformée pour permettre le passage des lames et l'adaptation
sur le nez de la cisaille.

Suivant l'invention encore le plateau présente dans sa
partie arrière, destinée à se loger sous la lame inférieure et sous le patin de glissement de la cisaille, des
découpes appropriées destinées à venir en correspondance
avec des vis ou autres éléments faisant saillie à la face
inférieure de ladite lame.

Pour mieux comprendre l'invention celle-ci est décrite
maintenant sur la base des dessins annexés, à titre
d'exemple uniquement, montrant en :

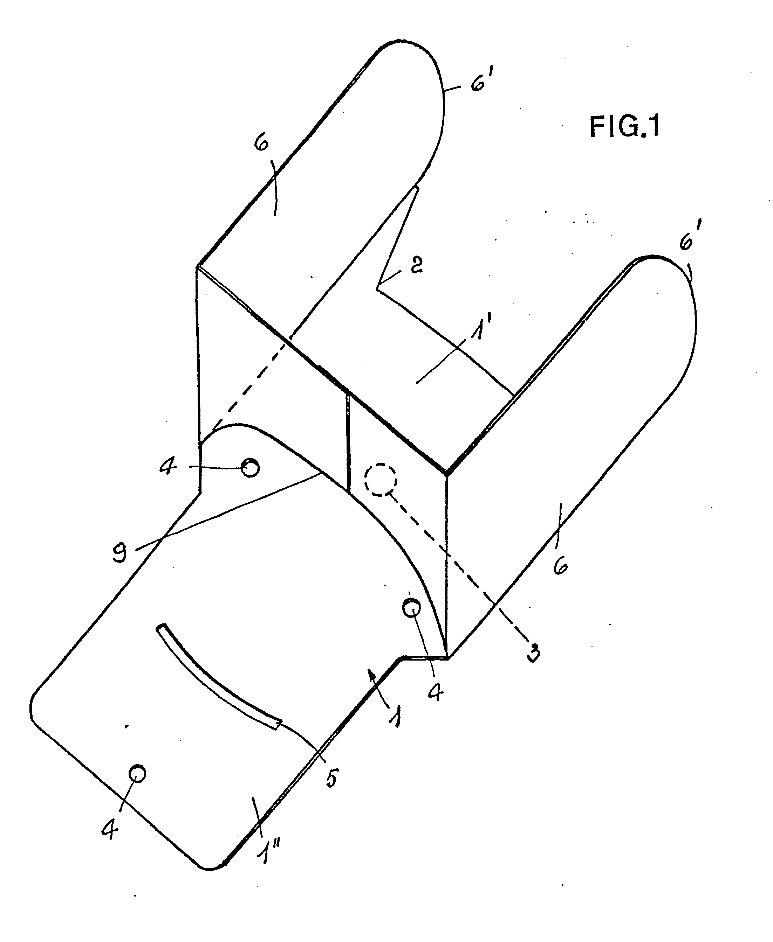

Figure 1 une vue en perspective d'un récolteur d'herbe
conforme à l'invention ;

Figure 2 une vue d'un flan avant la mise en forme du récolteur de figure 1 ;

Figures 3 et 4 deux vues du récolteur de figure 1 monté
sur une cisaille à gazon, respectivement dans une vue en
plan par dessus et dans une vue en plan par dessous.

Comme on le voit aux dessins un récolteur d'herbe réalisé
conformément à l'invention est constitué par un plateau 1,
qui présente une forme analogue à celle de la lame inférieure d'une cisaille à gazon électrique courante. Sa
partie avant 1' est légèrement plus large que sa partie
arrière 1" et son bord antérieur 2 est découpé suivant la
forme des deux dents d'extrémité de ladite lame inférieure.

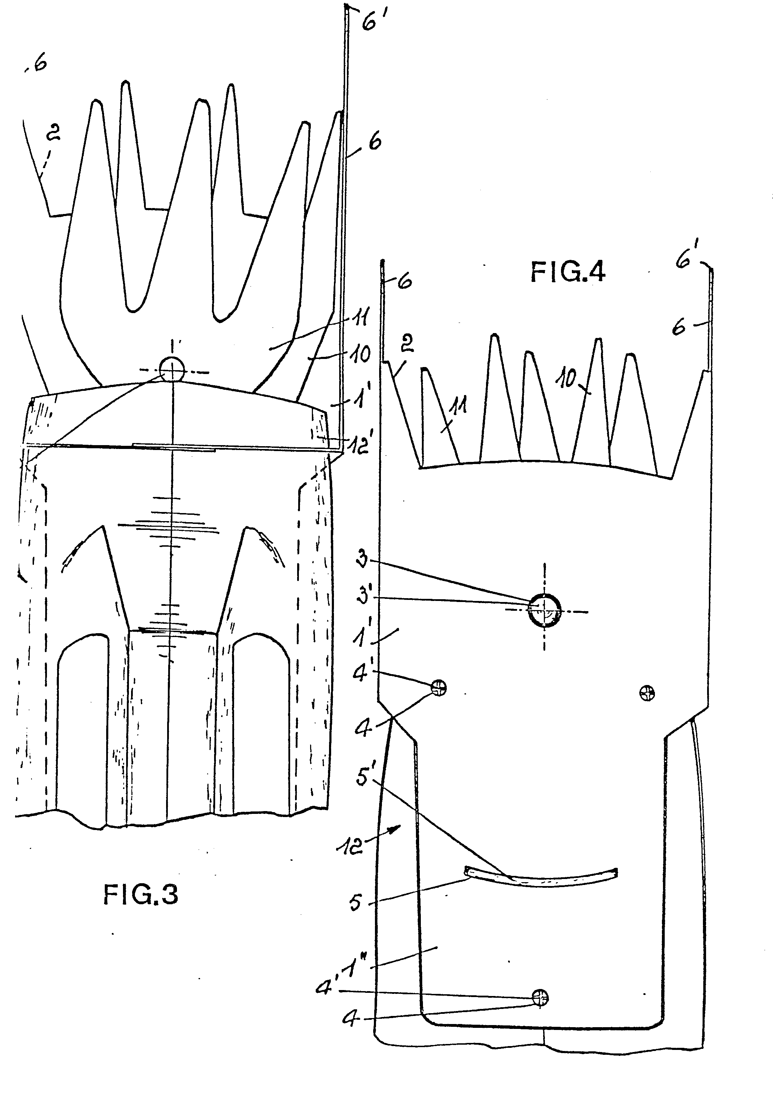

La partie arrière 1" du plateau est pourvue de découpes
appropriées, ici un grand trou 3, trois petits trous 4 et une découpe en arc de cercle 5, destinées à recevoir des éléments faisant saillie sur la face inférieure de la lame inférieure, de manière que l'arrière du plateau 1, lorsqu'il est adapté sous la cisaille, soit bien d'aplomb. On voit aux dessins, en figure 4, que ces découpes appropriées reçoivent respectivement l'axe de rotation 3' de la lame supérieure, les vis de fixation 4' des lames sur la cisaille et la rainure 5' de l'ergot de rotation de ladite lame supérieure.

Ces découpes ont été faites pour une cisaille d'un fabricant bien déterminé. Bien entendu pour des cisailles de fabricants différents on pourra prévoir d'autres découpes ou des découpes à des endroits différents. L'empattement peut aussi être modifié pour s'adapter à l'une ou l'autre semelle donnée.

Sur chaque bord latéral de la partie avant du plateau 1 se dresse un flasque vertical 6 et ces flasques 6 forment avec la partie de plateau 1' un boîtier ouvert à l'avant et fermé à l'arrière par une liaison entre les deux flasques. Cette liaison peut être constituée par un prolongement arrière de chaque flasque, lesdits prolongements 7, 8 étant repliés à angle droit et se chevauchant pour être réunis par soudure, collage, etc.

La face arrière 7, 8 du boîtier ainsi constitué présente une ouverture 9 à sa base pour permettre l'introduction des lames de la cisaille et du nez de celle-ci.

A l'avant les flasques latéraux 6 présentent avantageusement une forme arrondie 6' pour empêcher le boîtier de pénétrer dans le sol en piquant de l'avant lors d'utilisation.

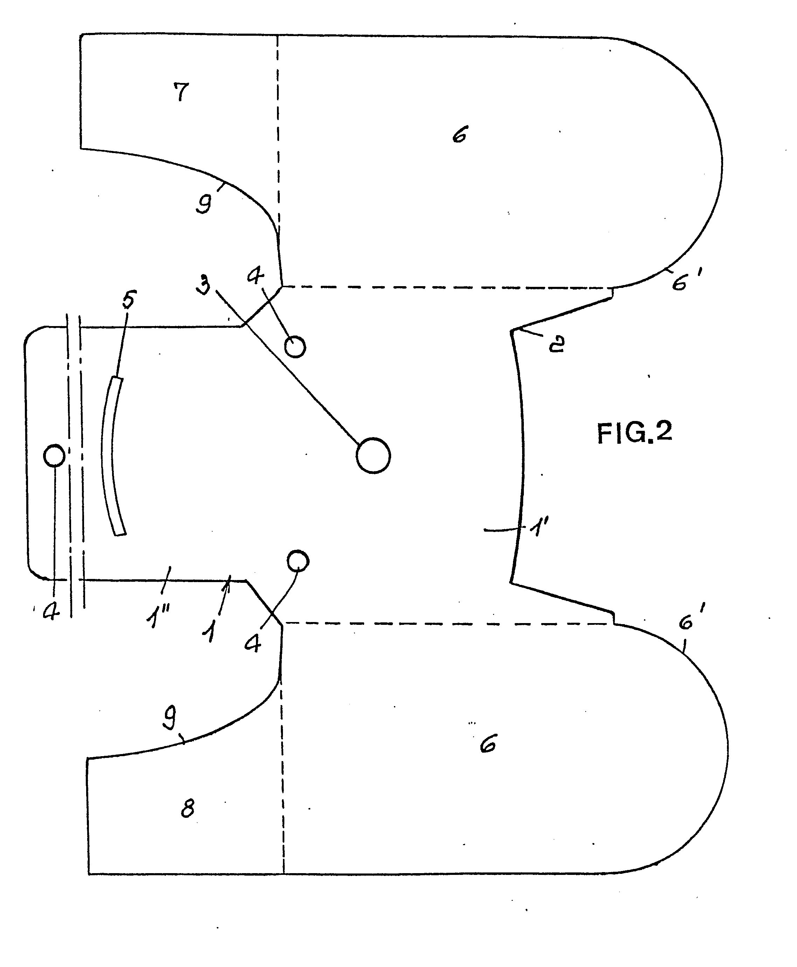

Pour confectionner un tel récolteur d'herbe on part de préférence d'un flan de tôle, tel que représenté en figure 2, qu'il suffit de plier suivant les lignes en traits interrompus. Un collage ou un soudage des éléments 7, 8 termine la réalisation du récolteur.

Pour utiliser un récolteur d'herbe suivant l'invention il suffit, après avoir dévissé les vis de fixation 4' des lames sur le patin de la cisaille, de faire glisser à travers l'ouverture 9 les lames 10, 11 de la cisaille 12 ainsi que le nez 12' de ladite cisaille, de vérifier que les découpes 3 et 5 s'appliquent bien autour des saillies de la lame inférieure 10 et de revisser les vis 4' à travers les trous 4 pour maintenir le récolteur sur la cisaille.

Le récolteur d'herbe, par la conformation de son bord antérieur 2, ne fait pas obstacle au mouvement de coupe de la lame supérieure 11 et l'herbe coupée par la cisaille s'accumule dans la boîte entre les parois 6 au-dessus des lames. Au fur et à mesure du remplissage du récolteur, on peut vider son contenu dans un sac à portée de main.

Un récolteur d'herbe suivant l'invention peut servir en même temps de guide-bordure et présente l'avantage de ne plus nécessiter de ratissage après un travail à la cisaille à gazon.

Revendications

1. Récolteur d'herbe pour cisaille à gazon électrique, caractérisé en ce qu'il est constitué par un plateau (1), qui épouse la forme de la lame inférieure de la cisaille pour s'adapter par sa partie arrière (1") sous ladite lame et le patin de glissement de ladite cisaille et qui présente à l'avant (1') sur sa face supérieure des flasques latéraux (6) formant un boîtier ouvert à l'avant et fermé à l'arrière par une liaison entre les deux flasques.

2. Récolteur d'herbe suivant la revendication 1, caractérisé en ce que la liaison arrière entre les flasques latéraux (6) est pourvue à sa base d'une ouverture (9) conformée pour le passage des lames de la cisaille et l'adaptation sur le nez de celle-ci.

3. Récolteur d'herbe suivant la revendication 1, caractérisé en ce que le plateau (1) présente à l'avant (1') un bord découpé (2) suivant la forme des dents d'extrémité de la lame inférieure de la cisaille.

4. Récolteur d'herbe suivant la revendication 1, caractérisé en ce que la partie arrière (1") du plateau (1), destinée à s'adapter sous le patin de glissement de la cisaille, porte des découpes (4, 5) appropriées aux éléments saillants prévus sur la face inférieure de la lame inférieure de la cisaille, certaines de ces découpes consistant en des trous (4) pour le passage des vis de fixation de la lame inférieure devant servir à la fixation du récolteur sur la cisaille.

5. Récolteur d'herbe suivant la revendication 1, caractérisé en ce que les flasques latéraux verticaux (6) se présentent à l'avant avec une forme arrondie (6').

6. Récolteur d'herbe suivant la revendication 1, caractérisé en ce que la liaison arrière entre les flasques latéraux est constituée par le pliage à angle droit d'un
prolongement (7, 8) de l'un ou des deux flasques (6).

7. Récolteur d'herbe suivant une ou plusieurs des revendications 1 à 6, caractérisé en ce qu'il est réalisé à
partir d'un flan de tôle  plié suivant la ligne d'angle
des flasques latéraux (6) et de leur prolongement arrière
(7, 8).

FIG.1

0070271

7

6

9

3    4

5

2

FIG.2

1'

4

1"    1

4

6'

9

8

6

6'

0070271

FIG.3

FIG.4